(19) Europäisches Patentamt
European Patent Office
Office européen des brevets

(11) EP 2 998 279 A1

(12) EUROPEAN PATENT APPLICATION
published in accordance with Art. 153(4) EPC

(43) Date of publication:
23.03.2016 Bulletin 2016/12

(21) Application number: 13884623.3

(22) Date of filing: 17.05.2013

(51) Int Cl.:
C02F 3/34 (2006.01) E03F 1/00 (2006.01)

(86) International application number:
PCT/JP2013/063778

(87) International publication number:
WO 2014/184948 (20.11.2014 Gazette 2014/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Takada, Shunsuke
Meguro-ku
Tokyo 152-0022 (JP)

(72) Inventor: Takada, Shunsuke
Meguro-ku
Tokyo 152-0022 (JP)

(74) Representative: Heine, Christian Klaus
KNH Patentanwälte Kahlhöfer Neumann
Rößler Heine PartG mbB
Postfach 10 33 63
40024 Düsseldorf (DE)

# (54) APPARATUS AND METHOD FOR PURIFYING WATER

(57) It is an object of the present invention to provide a water purification apparatus and a method thereof utilizing an elongated closed water channel, and having increased purification efficiency and facilitated maintenance.

The filtration apparatus 1A is provided with: a plurality of tube bodies arranged in parallel with their longitudinal directions directed in the vertical directions; and communication parts adapted to connect adjacent pairs of the tube bodies, thereby forming a water channel. The communication parts connect the tube bodies arranged in parallel alternately on upper and lower sides of the tube bodies. The tube bodies constitute the biofiltration part by aerobic bacteria, and the tube body constitutes the biofiltration part by anaerobic bacteria. The communication part is equipped with a control valve adapted to arbitrarily control a flow rate of water to be purified flowing into the tube body.

FIG. 1

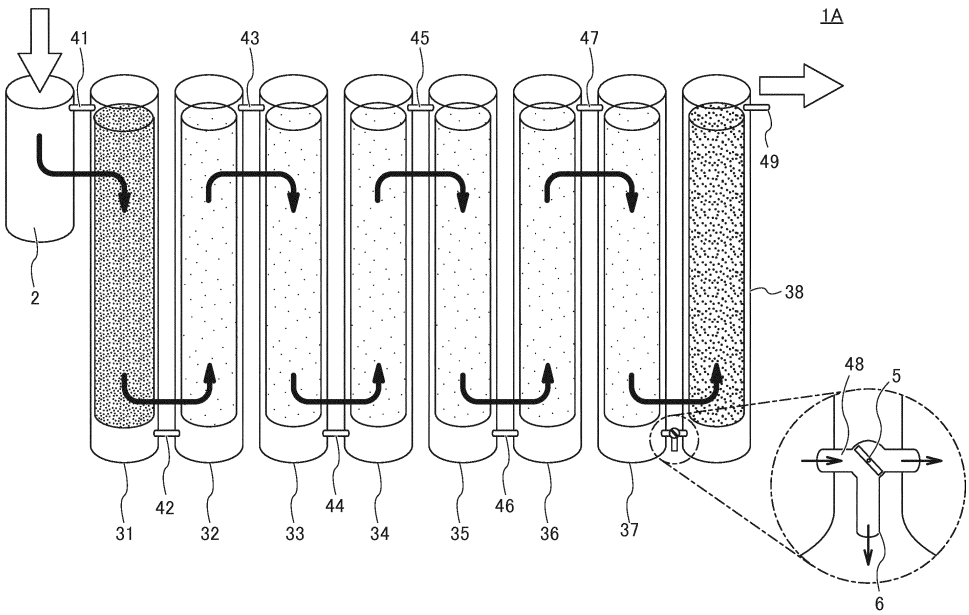


EP 2 998 279 A1

## Description

TECHNICAL FIELD

The present invention relates to a water purification apparatus and a method thereof utilizing an elongated closed water channel.

BACKGROUND ART

Conventionally, filtration has been employed as a method of purifying water such as domestic wastewater and sewage. The types of filtration for water purification are classified into physical filtration, in which contamination is absorbed by a filtering medium, and biofiltration which is adapted to purify water by the activity of bacteria. Filtration apparatuses employing the above described filtration principles are designed with an aim to realize a purification process occurring in the natural world within a purification tank.

A conventional water purification apparatus generally performs the following steps: (1) firstly, absorbing and physically removing solid matters by a filtering medium such as a screen (filter) (physical filtration), (2) secondly, decomposing organic matters such as excrement of organisms to ammonia by an enzyme and the like, and (3) then, carrying out oxidation decomposition by the activity of aerobic bacteria until ammonia is converted into nitrous acid and further into nitrate (nitrification).

During the process of oxidation decomposition (nitrification) from ammonia to nitrate, oxygens are consumed and hydrogen ions are increased. Consequently, water in a water tank becomes acidic, and a hydrogen ion concentration index (hereinafter, referred to as "pH") decreases. This means that the increase of nitrate causes the water in the water tank to become acidic (to decrease in pH).

Furthermore, nitrate is a causative substance of eutrophication. As a consequence of accelerated eutrophication, there is a fear of abnormal proliferation of plankton and generation of water bloom. Further acceleration of eutrophication will cause a shortage of dissolved oxygen in the water, thereby producing a bad smell from dead algae and fish.

In the natural soil and rivers, however, anaerobic bacteria decompose the nitrate generated by nitrification into nitrogen gas (denitrification), and the nitrogen gas returns to the air. Thus, a cycle of nitrification and denitrification (nitrogen cycle) is realized. Rivers and soil in a balanced state owing to this nitrogen cycle functioning correctly are maintained approximately in a neutral state.

However, actual circumstances are such that, especially in mountainous areas where sewerage is not installed completely, domestic wastewater directly flows into rivers, and in urban areas, sewage plants and factories discharge into rivers sewerage water and industrial wastewater before they are purified completely.

Japanese Unexamined Patent Application, Publication No. 2002-143887 discloses a technology concerning a filtration apparatus developed aiming that the above described nitrogen cycle is efficiently carried out in a water tank or the like.

As shown in Fig. 7, the filtration apparatus disclosed by Japanese Unexamined Patent Application, Publication No. 2002-143887 includes a plurality of tube bodies, each having a filtering medium filled therein, arranged in parallel to one another so that each tube body is held in communication with the adjacent tube body, wherein an inlet side tube body is filled with a physical filtering medium, a final stage tube body is configured as a biofiltration part by anaerobic bacteria, and intermediate tube bodies are configured as a biofiltration part by aerobic bacteria. According to this technology, it is possible to perform not only the purification process of nitrification but also to perform purification processes of both nitrification and denitrification sequentially in series in the same facility. Therefore, according to this technology, as shown in the graph of an experimental case result in Fig. 8, nitrate concentration in water in the water tank increases for a while with an increasing amount of nitrate generation after the lapse of 15 to 18 days from operation start of the water filtration apparatus, but gradually decreases from after the lapse of 23 to 24 days by the activity of proliferated anaerobic bacteria, and becomes approximately constant after the lapse of 60 days. As a result of this, as shown in Fig. 9, it is possible to maintain the water in the water tank approximately in a neutral state (approximately 7.0 in pH).

THE DISCLOSURE OF THE INVENTION

Problems to be Solved by the Invention

According to the technology disclosed by Japanese Unexamined Patent Application, Publication No. 2002-143887, however, there has been a case in which dissolved oxygen concentration in the water to be purified which flows into the tube body serving as the biofiltration part by anaerobic bacteria becomes excessively high owing to, for example, insufficiency of the total length of the tube bodies serving as the biofiltration part by aerobic bacteria, insufficient amount of filtering media in the biofiltration part by aerobic bacteria, or excessive flow rate of the water to be purified. In this case, excessive amount of oxygen for the anaerobic bacteria flows into the biofiltration part by anaerobic bacteria. Since the anaerobic bacteria cannot perform denitrification under such a high oxygen concentration circumstance, there has been a fear that the anaerobic bacteria cannot carry out denitrification activity, thereby decreasing the efficiency of denitrification. As a result of this, owing to nitrate accumulation, there has been a fear of eutrophication and continuous increase of acidity of the water within the water purification tank.

The present invention has been made in view of the above described circumstances, and it is an object of the present invention to provide a water purification apparatus and a method thereof utilizing an elongated closed water channel having increased purification efficiency and facilitated maintenance.

MEANS FOR SOLVING THE PROBLEMS

In accordance with a first aspect of the present invention, there is provided a water purification apparatus, including: a plurality of filtering medium containers arranged in parallel, each being adapted to accommodate a filtering medium; and communication parts adapted to form a water channel connecting respective adjacent pairs of the filtering medium containers arranged in parallel, wherein at least one of the filtering medium containers arranged in parallel is configured as a biofiltration part by aerobic bacteria, a filtering medium container arranged downstream from the biofiltration part by aerobic bacteria is configured as a biofiltration part by anaerobic bacteria, and the water purification apparatus is provided with at least one control valve adapted to divide a water flow in at least two directions so as to arbitrarily control a flow rate of the water flowing into the biofiltration part by anaerobic bacteria.

According to the first aspect of the present invention, since the water purification apparatus includes the flow rate control valve for controlling the flow rate of the water to be purified flowing in the filtering medium container serving as the biofiltration part by anaerobic bacteria, a hypoxic environment suitable for proliferation of anaerobic bacteria is created, thereby promoting denitrification activity of the anaerobic bacteria. As a result of this, since the water in the water tank can be maintained approximately in a neutral state, it is possible to purify water for a long time period by use of a single apparatus.

Furthermore, according to the first aspect of the present invention, for example, in a case of application to a fish tank, it is possible to save time and effort for changing water in the tank, since the water can be continuously purified for a long time period while maintaining the water approximately in a neutral state.

In accordance with a second aspect of the present invention, in addition to the first aspect of the present invention, the communication parts are configured to connect respective adjacent pairs of the filtering medium containers arranged in parallel alternately on one side and the other in relation to a center in a longitudinal direction of the filtering medium container.

According to the second aspect of the present invention, since the water to be purified moves in a zigzag shape, it is possible to mount the filtration apparatus in a narrow space, for example, and to efficiently purify water.

EFFECT OF THE INVENTION

According to the present invention, it is possible to provide a water purification apparatus and a method thereof utilizing an elongated closed water channel, having increased purification efficiency and facilitated maintenance.

BRIEF DESCRIPTION OF THE DRAWINGS

Fig. 1 is a diagram showing a configuration of a filtration apparatus 1A according to a first embodiment of the water purification apparatus of the present invention;

Fig. 2 is a diagram showing a configuration of a tube body 3 of the filtration apparatus 1A according to the first embodiment of the water purification apparatus of the present invention;

Fig. 3 is a diagram showing another configuration of the tube body 3 of the filtration apparatus 1A according to the first embodiment of the water purification apparatus of the present invention;

Fig. 4 is a schematic diagram explaining a basic principle of the present invention;

Fig. 5 is a diagram showing a configuration, different from the configuration shown in Fig. 1, of a filtration apparatus 1B according to a second embodiment of the water purification apparatus of the present invention;

Fig. 6 is a diagram showing a configuration, different from any configuration shown in Figs. 1 and 5, of a filtration apparatus 1C according to a third embodiment of the water purification apparatus of the present invention;

Fig. 7 is a diagram showing a configuration of a filtration apparatus disclosed by Japanese Unexamined Patent Application, Publication No. 2002-143887;

Fig. 8 is a graph showing an experimental result of the filtration apparatus disclosed by Japanese Unexamined Patent Application, Publication No. 2002-143887; and

Fig. 9 is a graph showing an experimental result of the filtration apparatus disclosed by Japanese Unexamined Patent Application, Publication No. 2002-143887.

PREFERRED MODE FOR CARRYING OUT THE INVENTION

In the following, a description will be given of embodiments of the present invention with reference to the accompanying drawings as needed.

<First Embodiment>

Fig. 1 is a diagram showing a configuration of a filtration apparatus 1A according to a first embodiment of the water purification apparatus of the present invention.

The filtration apparatus 1A is provided with a pump 2, tube bodies 31 to 38, communication parts 41 to 48, an outlet 49, a control valve 5, and a drain part 6.

The pump 2 is adapted to pump up water from a water tank and supply the water to be purified to the tube body 31 via the communication part 41, which will be described later.

The tube bodies 31 to 38, each being a cylindrical shaped container that can accommodate inside thereof a filtering medium 11, are arranged in parallel to one another. Hereinafter, each of the tube bodies 31 to 38 may be simply referred to as the "tube body 3", when a common configuration or function thereof is to be described. Among the tube bodies 3 arranged in parallel, the final tube body 38 is provided with a discharge port (not shown) to discharge the purified water to the water tank.

Although, according to the present embodiment, a hollow cylindrical shaped body is employed as the tube body 3, the present invention is not limited to this, and any kind of hollow structure container can be applied as long as the container can accommodate the filtering medium. For example, a cuboid shaped body is applicable.

The communication part 41 is configured by a pipe arranged so that water flows across the pump 2 and the tube body 31.

The communication parts 42 to 48 are each configured by a pipe arranged so that water flows across each adjacent pair of the tube bodies 31 to 38.

This means that a water channel is formed by connecting the pump 2 and the tube body 31 via the communication part 41, the tube body 31 and the tube body 32 via the communication part 42, the tube body 32 and the tube body 33 via the communication part 43, the tube body 33 and the tube body 34 via the communication part 44, the tube body 34 and the tube body 35 via the communication part 45, the tube body 35 and the tube body 36 via the communication part 46, the tube body 36 and the tube body 37 via the communication part 47, and the tube body 37 and the tube body 38 via the communication part 48.

Hereinafter, each of the communication parts 42 to 48 for connecting each adjacent pair of the plurality of tube bodies 3 arranged in parallel to each other may be simply referred to as the "communication part 4", when a common configuration or function thereof is to be described.

The outlet 49 is provided with an opening part which permits the water to be purified, which has moved through the tube body 38, to flow out into the water tank.

The tube body 31 constitutes a "physical filtration part", and the six tube bodies 32 to 37 subsequent to the tube body 31 constitute a "biofiltration part by aerobic bacteria".

Similarly, the final stage tube body 38 constitutes a "biofiltration part by anaerobic bacteria".

As will be understood from the arrows in Fig. 1 indicating water flows, the tube body 31 is arranged on the most upstream side, and next to the tube body 31, the tube bodies 32 to 38 are arranged in parallel sequentially toward downstream. This means that the water to be purified, which has been sucked by the pump 2, moves toward downstream in the order of the physical filtration part, the biofiltration part by aerobic bacteria, and the biofiltration part by anaerobic bacteria.

Here, "aerobic bacteria" are bacteria that require oxygen and intended to mean ammonia oxidation bacteria such as species of Nitrosomonas that convert ammonia into nitrous acid through respiration and nitrous acid oxidation bacteria such as species of Nitrospira that convert nitrous acid into nitrate.

Similarly, "anaerobic bacteria" are bacteria that perform anaerobic respiration (oxygen free metabolism) and intended to mean denitrifying bacteria such as Pseudomonas denitrificans and Micrococcus denitrificans that convert nitrate into nitrogen gas through nitrate respiration (denitrification). Under an environment in which the dissolved oxygen concentration in the water exceeds approximately 2 mg/L, the denitrifying bacteria perform aerobic respiration and cease from denitrification. Accordingly, in order to promote denitrification, it is preferable to provide an anaerobic environment in which the dissolved oxygen concentration within the biofiltration part by anaerobic bacteria does not exceed 2 mg/L.

Furthermore, Pseudomonas and Micrococcus are heterotrophic bacteria that require organic matter as a carbon source for acquiring energy. For this reason, it is necessary to fill an organic carbon preparation, which will be described later, in the biofiltration part by anaerobic bacteria.

The communication parts 41, 43, 45, and 47 are each disposed in the vicinity of an upper end of the tube body 3, and the communication parts 42, 44, and 46 are each disposed in the vicinity of a lower end of the tube body 3. Since the communication parts 4 are disposed alternately on upper and lower sides of the arrayed tube bodies 3, the water channel forms a zigzag shape through which the water to be purified flows.

According to the present embodiment, the communication part 48 is provided with the control valve 5 and the drain part 6. The control valve 5 serves as a valve for controlling a flow destination of the water to be purified that flows in the communication part 48. The control valve 5 can arbitrarily control the ratio of a flow rate flowing into the tube body 38 and a flow rate flowing through the drain part 6 to the water tank. For example, when the control valve 5 is set in a state of "30 % open", the water to be purified flowing into the tube body 38 is configured to be 30 % of the water to be purified that has flowed into the communication part 48, and the water flowing through the drain part 6 to the water tank is to be 70 % thereof. When the control valve 5 is set in a state of "fully open", the entire water to be purified that has flowed into the communication part 48 flows into the tube body 38. On the other hand, when the control valve 5 is in a state of "100 % closed", the entire water to be purified that has flowed into the communication part 48 flows through the drain part 6 to the water tank.

Fig. 2 is a diagram showing a configuration of the tube body 3 of the filtration apparatus 1A according to the first embodiment of the water purification apparatus according to the present invention.

The tube body 3 shown in Fig. 2 is provided with a pair of communication part components 4a and 4b respectively having lids 7a and 7b at opposed positions of an upper end side surface thereof. Similarly, the tube body 3 is provided with a pair of communication part components 4c and 4d respectively having lids 7c and 7d at opposed positions of a lower end side surface thereof.

The upper side communication part component 4b of one tube body 3 is configured to be fitable to the upper side communication part component 4a of another tube body 3 (not shown) adjacent to the right side thereof. By fitting the communication part components 4a and 4b to each other, a continuous water channel, i.e., the communication part 4 is formed between the two tube bodies 3. A similar water channel can be formed by fitting the lower side communication part components 4c and 4d of a pair of adjacent tube bodies 3 to each other. In a case in which the aforementioned communication part components cannot be directly fitted to each other, they may be coupled to each other by means of a pipe of rubber, plastic, or the like.

There may be another coupling method such that the lower side communication part component 4d of one tube body 3 is coupled via a pipe to the upper side communication part component 4a of another tube body 3 (not shown) adjacent to the right side thereof.

According to the present embodiment, the outlet 49 of Fig. 1 is constituted by the communication part component 4b in a state in which the lid 7b is removed.

In order to prevent the filtering medium 11 from flowing out, meshes 10a, 10b, 10c, and 10d are fixed to respective opening parts of the communication part components 4a, 4b, 4c, and 4d on an inner wall side of the tube body 3.

Incidentally, on a side surface of the tube body 3, a small hole having a lid (not shown) may be formed higher than the communication part components 4a and 4b or lower than the communication part components 4c and 4d so as to be used as a vent hole or a drain hole as needed.

The filtration apparatus 1 can be assembled by arranging the tube bodies 3 in parallel with their longitudinal directions directed in the vertical directions, alternately connecting the upper and lower side communication part components 4a to 4d to each other in a zigzag pattern, and closing the unnecessary communication parts 4 with the respective lids to ensure that a zigzag shaped long water channel is formed as a whole, as shown by the arrows in Fig. 1.

Alternatively, it is possible to assemble the filtration apparatus 1 by preparing pre-assembled blocks, each of which is composed of a plurality of tube bodies 3, and connecting the pre-assembled blocks to each other.

The filtering medium 11 is accommodated in the tube body 3. A bottom of the tube body 3 is closed. On the other hand, a top of the tube body 3 is in an opened state for allowing the filtering medium 11 to be inserted into and removed from the tube body 3, and is provided with a lid 8 to be freely closable. Furthermore, it is possible to assemble the filtration apparatus 1A having a required length by connecting an appropriate number of the tube bodies 3.

The water to be purified that has flowed into the tube body 3 through the upper side communication part 4 passes through the filtering medium 11. Subsequently, the water to be purified flows into the lower side of the adjacent (right side) tube body 3 through the lower side communication part 4. The water to be purified that has flowed in the tube body 3 through the lower side communication part 4 from the adjacent (left side) tube body 3 passes through the filtering medium 11. Then, the water to be purified flows into an upper side of the adjacent (right side) tube body 3 through the upper side communication part 4.

By repeating the above described series of movements of the water to be purified, the water to be purified moves through a zigzag shape path. In this manner, the water to be purified moves a long distance even within a narrow water tank. Accordingly, it is possible to efficiently purify water.

The tube body 31 configured as the "physical filtration part" is filled with a filtering medium suitable for physical filtration.

The filtering medium 11 filled in each of the tube bodies 32 to 37 configured as the "biofiltration part by aerobic bacteria" is constituted by a large number of porous rings that ensure water permeability and large surface area.

The filtering medium 11 filled in the tube body 38 configured as the "biofiltration part by anaerobic bacteria" is a filtering medium suitable for proliferation of anaerobic bacteria, i.e., organic carbon preparation that serves as a nutrient source for anaerobic bacteria. The organic carbon preparation is constituted by, for example, a water-insoluble organic plastic material.

With respect to the filtering medium 11 filled in each tube body 3, as shown in Fig. 3, different kinds of filtering medium 11 may be filled in a single tube body 3. For example, in Fig. 3, an upper half of the tube body 3 is filled with a filtering medium 11a constituted by comparatively large-sized porous rings, and a lower half thereof is filled with a filtering medium 11b constituted by comparatively fine-sized porous rings.

<Operation>

The water to be purified pumped up by the pump 2 moves toward the tube body 31, where solid matter is removed. During a process of moving from the tube body 32 to the tube body 37, organic matter in the water to be purified is nitrified to ammonia, nitrous acid, and then nitrate. Along with the flow of the water to be purified, the nitrate flows in the final stage tube body 38 and is denitrified by the activity of the anaerobic bacteria in the tube body 38. Through the above described series of processes of nitrification and denitrification, the water to be purified is purified and then returned to the water tank.

Where water to be purified has been supplied from the pump 2 to the tube body 31, a sufficient amount of oxygen for proliferation of aerobic bacteria is dissolved in the water along with organic matter. As the water flows from the tube body 31 toward the tube body 37, oxygen is gradually consumed by the aerobic bacteria and the like, and the dissolved oxygen concentration is correspondingly decreased.

The dissolved oxygen concentration in the water for allowing proliferation of anaerobic bacteria is generally regarded as 2 mg/L or less. In a case in which the dissolved oxygen concentration is high in the water to be purified flowing out from the tube body 37, which serves as the final stage tube body of the "biofiltration part by aerobic bacteria", and the water to be purified having high concentration of oxygen flows into the tube body 38, which serves as the "biofiltration part by anaerobic bacteria", the dissolved oxygen concentration in the water to be purified in the tube body 38 may exceed 2 mg/L. Accordingly, without the control valve 5, it would be necessary to add another tube body which serves as the "biofiltration part by aerobic bacteria" in order to decrease the dissolved oxygen concentration in the water to be purified flowing out from the final stage tube body of the "biofiltration part by aerobic bacteria" (i.e., the water to be purified flowing into the tube body of the "biofiltration part by anaerobic bacteria") to 2 mg/L or less.

According to the present embodiment, the control valve 5 is adapted to control so as to decrease a flow rate of the water to be purified flowing into the tube body 38 and to increase a flow rate of the water to be purified flowing through the drain part 6 to the water tank. Even if the flow rate flowing into the tube body 38 is decreased, the dissolved oxygen concentration immediately after the water to be purified flows into the tube body 38 remains still high. However, in a case in which the flow rate flowing into the tube body 38 is low, since the oxygen diffuses within the tube body 38, it is possible to suppress the dissolved oxygen concentration to a low level in the tube body 38. Accordingly, the dissolved oxygen concentration in the water to be purified in the tube body 38, which serves as the "biofiltration part by anaerobic bacteria", reaches to a value sufficient for the activity of anaerobic bacteria. This means that the anaerobic bacteria in the tube body 38 can perform denitrification to decompose nitrate. Thus, the water is purified and flows back to the water tank from inside of the tube body 38.

From the foregoing description, it is to be understood that it is possible to create an environment suitable for proliferation of anaerobic bacteria, by controlling the control valve 5 in a manner as describe above, without adding any tube bodies which serve as the "biofiltration part by aerobic bacteria".

On the other hand, since the water drained through the drain part 6 to the water tank via the control valve 5 contains nitrate, the nitrate contained in the water partially flows back to the water tank for a while. However, the water in the water tank is brought in the filtration apparatus 1A again, and a certain degree of water flows into the tube body 38 via the control valve 5. Accordingly, the nitrate that has been contained in the water drained through the drain part 6 to the water tank will eventually be brought into the tube body 38 and denitrified by the anaerobic bacteria.

Fig. 4 is a schematic diagram explaining a basic principle of the present invention. It is assumed that Q denotes a flow rate flowing out from the "biofiltration part by aerobic bacteria", and the control valve 5 serves a role to divide the flow rate Q into a flow rate q1 flowing into the tube body 38 and a flow rate q2 flowing through the drain part 6 to outside of the filtration apparatus 1A.

$$q1 = (1 - r)*Q \qquad (1)$$

$$q2 = r*Q \qquad (2)$$

In Equations (1) and (2), r (hereinafter, referred to as a "transmission ratio" as needed) denotes a ratio of the flow rate q1 to the flow rate Q.

The transmission ratio r is appropriately determined so that the dissolved oxygen concentration in the tube body 38 should come to a level suitable for the activity of the anaerobic bacteria.

For example, in a case in which the optimum transmission ratio r is determined to be 70 %, a knob of the control valve 5 is rotated so that the control valve 5 is in a state of "70 % open" as described above. As a result of this, it is possible to cause 70 % of the water to be purified, which has been flowed into the communication part 48, to flow into the tube body 38.

The transmission ratio r may be determined in comprehensive consideration of the total length of the tube bodies constituting the biofiltration part by aerobic bacteria, the amount of the filtering media in the biofiltration part by aerobic bacteria, the flow rate of the water to be purified, the quality of the water in the water tank, and the like.

As described above, since the water purification apparatus according to the present embodiment is provided with the control valve 5 for controlling the flow rate of the water to be purified flowing into the tube body 38, which serves as the "biofiltration part by anaerobic bacteria", it is possible to create a hypoxic environment suitable for proliferation of anaerobic bacteria, thereby promoting the denitrification activity of the anaerobic bacteria. As a result of this, since the water in the water tank can be maintained approximately in a neutral state, it is possible to purify water for a long time period by a single apparatus.

Furthermore, for example, in a case in which the filtration apparatus 1A according to the present embodiment is applied to a fish tank, since the water can be continuously purified for a long time period while maintaining the water in a neutral state, it is possible to save time and effort for changing the water in the water tank.

In the filtration apparatus 1A according to the first embodiment, it has been described that the control valve 5 is mounted to the communication part 48, which connects the final tube body 37 of the biofiltration part by aerobic bacteria with the tube body 38 configured as the biofiltration part by anaerobic bacteria. However, the present invention is not limited to the control valve 5 of the filtration apparatus 1A, and the control valve may not necessarily control the flow rate flowing out from the final tube body of the biofiltration part by aerobic bacteria.

This means that the control valve may be mounted at any location as long as the control valve can control flow rate of water to be purified flowing into the biofiltration part by anaerobic bacteria. For example, the control valve may be mounted at any one or more of the communication parts 42 to 47. Even if the control valve is configured so as to control a flow rate flowing out from a tube body 3 on an upstream side from the final tube body 3 of the biofiltration part by aerobic bacteria, it is also possible to control the flow rate of the water to be purified flowing into the biofiltration part by anaerobic bacteria, thereby making it possible to create a hypoxic environment suitable for proliferation of anaerobic bacteria, and realizing the effect of the present invention.

<Second Embodiment>

Although it has been described that in the filtration apparatus 1A according to the first embodiment only one control valve 5 is provided, in a filtration apparatus according to a second embodiment, not only one but a plurality of control valves 5 may be provided.

Fig. 5 is a diagram showing a configuration, different from the configuration shown in Fig. 1, of the filtration apparatus 1B according to the second embodiment of the water purification apparatus of the present invention.

In the filtration apparatus 1B according to the second embodiment, control valves 51 to 57 are respectively mounted to the communication parts 41 to 47. The control valves 51 to 57 are respectively provided with drain parts 61 to 67, each including a discharge port for returning the water back to the water tank from the communication part 4. Furthermore, the tube bodies 37 and 38 constitute the biofiltration part by anaerobic bacteria.

Since other constituents of the filtration apparatus 1B according to the second embodiment are similar to the first embodiment, those constituents similar to the first embodiment are omitted from description hereinafter.

According to the second embodiment, since the filtration apparatus 1B is provided with a plurality of control valves 51 to 58, it is possible to configure each control valve to have each independent opening degree, i.e., transmission ratio r. For example, it may be possible to configure the control valves 51 to 57 to have respective opening degrees (or transmission ratios r) gradually decreasing in the increasing order of the control valve 51 to 57, while the control valve 58 is set to be "90 % open".

As described above, it is possible to control the flow rate flowing into the tube bodies 37 and 38, which serve as the biofiltration part by anaerobic bacteria, in a manner that the transmission ratios of respective control valves are configured to decrease sequentially. Accordingly, it is possible to gradually decrease the flow rate flowing into the biofiltration part by aerobic bacteria.

Furthermore, according to the second embodiment, it is also possible to control the flow rate across the tube bodies 37 and 38, which serve as the biofiltration part by anaerobic bacteria.

As described above, in the filtration apparatus 1B provided with a plurality of control valves according to the second embodiment, it is possible to control the flow rate in more refined intervals than the filtration apparatus 1A according to the first embodiment, which has been provided with a single control valve 5. Accordingly, it is possible to appropriately control a gradient of the dissolved oxygen concentration throughout the tube bodies 3 arranged in parallel.

As described above, the filtration apparatus 1B is provided with a plurality of control valves for controlling the flow rate of the water to be purified flowing into the tube bodies 37 and 38 of the biofiltration part by anaerobic bacteria. Accordingly, by selectively controlling the flow rates flowing through a plurality of drain parts, a hypoxic environment suitable for proliferation of anaerobic bacteria is created, thereby promoting denitrification activity of the anaerobic bacteria. As a result of this, since the water in the water tank can be maintained approximately in a neutral state, it is possible to continuously purify water for a long time period by a single apparatus.

In the above described first and second embodiments, the control valve has been attached to the communication part 4. However, the control valve may be integrated with the lid 8 of the top of the tube body 3, or the control valve may be connected to a drain port attached to the lid 8 of the top of the tube body 3.

Since the above described control valve is arranged on the top of the tube body 3, it is easy to reach the control valve 5 even in a state in which the filtration apparatus 1B is mounted in the water tank. Accordingly, it is easy to operate to control the control valve 5.

<Third Embodiment>

According to the first and second embodiments, the control valve has been adapted to divide the flow rate flowing in the valve into two outflow directions. However, the control valve applicable to the water purification apparatus according to the present invention is not limited to this. Any valve may be applicable to the control valve as long as the valve is adapted to branch a part of the inflow into at least one direction, i.e., to narrow down the flow rate.

Fig. 6 is a diagram showing a configuration, different from the configurations of Figs. 1 and 5, of a filtration apparatus 1C according to a third embodiment of the water purification apparatus of the present invention.

According to the third embodiment, two water channels are provided from the tube body 37 to the tube body 38. Two water channels include a water channel through the communication part 48 and a water channel via a control valve 500. This means that, according to the third embodiment, in place of the control valve which has been provided to the communication part 48, the control valve 500 is provided to the water channel between the upper side of the tube body 37 and the tube body 38.

Since other constituents of the filtration apparatus 1C according to the third embodiment are similar to the first embodiment, those constituents similar to the first embodiment are omitted from description hereinafter.

According to the third embodiment, a part of the water that has flowed via the communication part 47 into the tube body 37 flows down from an upper side toward a lower side of the tube body 37 permeating the filtering medium, and moves into the tube body 38, thereby flowing from an lower side toward an upper side of the tube body 38. On the other hand, the rest of the water that has flowed into the tube body 37 moves via the control valve 500 to the tube body 38. Finally, the water flows through the outlet 49 to outside of the filtration apparatus 1C.

Although the control valve 500 according to the third embodiment serves as a valve adapted to cause the inflow to partially flow out in one direction, viewed from upstream of the control valve 500 in Fig. 6, the control valve 500 can be regarded to bifurcate the water channel into a water channel flowing from the upper side toward the lower side of the tube body 37 and a water channel flowing into the control valve 500.

In Fig. 6, it is assumed that Q denotes a flow rate flowing via the communication part 47 into the tube body 37, the control valve 500 divides the flow rate Q into a flow rate q1 flowing into the tube body 38 and a flow rate q3 permeating inside of the tube body 37.

$$q1 = (1 - r)*Q \qquad (3)$$

$$q3 = r*Q \qquad (4)$$

In Equations (3) and (4), r (transmission ratio) denotes a ratio of the flow rate q1 to the flow rate Q.

The transmission ratio r is appropriately determined so that the dissolved oxygen concentration in the tube body 38 should come to a level suitable for the activity of the anaerobic bacteria.

If, for example, the current transmission ratio r is 0 % (i.e., the entire flow of flow rate Q permeates inside of the tube body 37), the flow rate flowing into the tube body 38 is excessively high and the dissolved oxygen concentration in the tube body 38 is excessively high to the degree that it is impossible to maintain an environment suitable for proliferation of anaerobic bacteria, it is effective to control the control valve 500 as follows.

In a case in which it is determined that the optimum transmission ratio r is 60 % in view of a proliferation condition of the anaerobic bacteria in the tube body 38, a knob of the control valve 500 is turned so that the control valve 500 is set in a state of "60 % open". As a result of this, it is possible to cause 60 % of the water to be purified that has flowed into the communication part 47 to flow via the control valve 500 in the tube body 38 and the remaining 40 % of the water to be purified to permeate inside of the tube body 37.

As described above, by controlling the control valve 500 so that an amount of the water to be purified to be permeated to the inside of the tube body 37 is decreased, the dissolved oxygen concentration decreases, since the water to be purified flows slowly in the final stage tube body 37 of the biofiltration part by aerobic bacteria. Accordingly, it is possible to decrease the dissolved oxygen concentration in the water to be purified flowing into the tube body 38, which serves as the biofiltration part by anaerobic bacteria. Thus, by controlling the control valve 500, it is possible to create a hypoxic environment suitable for proliferation of anaerobic bacteria in the biofiltration part by anaerobic bacteria.

Without the control valve 500 in the above described case, it would be necessary to add another tube bodies which serve as the "biofiltration part by aerobic bacteria" in parallel, as much as necessary to decrease the dissolved oxygen in the water flowing into the tube body 38. However, it requires labor and cost to add the tube bodies. According to the present embodiment, the control valve 500 is employed to appropriately control the flow rate flowing in the biofiltration part by anaerobic bacteria. Thus, without adding any tube bodies, it is possible to create a hypoxic environment suitable for proliferation of anaerobic bacteria in the biofiltration part by anaerobic bacteria.

As described above, since the water purification apparatus according to the present embodiment is provided with a control valve 500 for controlling the flow rate of the water to be purified flowing into the tube body 38, which serves as the biofiltration part by anaerobic bacteria, a hypoxic environment suitable for the proliferation of anaerobic bacteria is created, thereby promoting the denitrification activity by anaerobic bacteria. As a result of this, since the water in the water tank can be maintained approximately in a neutral state, it is possible to purify water for a long time period by a single apparatus.

Although, in the above described embodiments, descriptions have been given of purification of sewage water or the like, the present invention can be similarly applied to any case of purification of water of, for example, a river, in an aquarium fish tank, or the like. Especially, by applying the filtration apparatus according to the present invention to an aquarium fish tank, the water in the water tank can be maintained approximately in a neutral state for a long time period. Accordingly, it is possible to save time and effort for periodically changing the water in the water tank

Depending on the quality of the water to be purified, there may be a case in which the content of organic matter that serves as a nutrient source for anaerobic bacteria is intrinsically low. However, the filtration apparatus according to the above described embodiments can be applied to purification of water of any quality by providing the final stage tube body with a filtering medium such as organic plastic and organic carbon, which serves as a nutrient source for anaerobic bacteria.

Furthermore, in the above described embodiments, the tube bodies 3 are arranged in parallel so that the longitudinal direction thereof is vertically oriented. However, the tube bodies 3 may be arranged in a lying state oriented in a horizontal direction.

Although, in the first to third embodiments of the present invention, it has been described that the tube bodies 31 to 38 are in a cylindrical shape of a hollow structure, the present invention is not limited to this, and any shape of a tube body may be applicable as long as the tube body is a hollow structured container that can accommodate the filtering medium inside thereof.

In the above, embodiments of the present invention have been described. However, these embodiments are mere examples, and the technical scope of the present invention is not limited to those examples. The present invention can take the form of a variety of different embodiments, and any modifications such as omission and substitution are possible without departing from the scope of the present invention. These embodiments and modifications thereof are included in the scope of the invention described in the present specification.

**EXPLANATION OF REFERENCE NUMERALS**

| | |
|---|---|
| 1A | Filtration Apparatus of First Embodiment |
| 1B | Filtration Apparatus of Second Embodiment |
| 1C | Filtration Apparatus of Third Embodiment |
| 2 | Pump |
| 3 | Tube Body |
| 4 | Communication Part |
| 5 | Control Valve |
| 6 | Drain Part |
| 7a, 7b | Lids of Upper Side communication Parts |
| 7c, 7d | Lids of Lower Side communication Parts |
| 8 | Lid on Top of Tube Body |
| 10 | Mesh |
| 11 | Filtering Medium |
| 31-38 | Tube Bodies |
| 41-48 | Communication Parts |
| 49 | Outlet |
| 51-58 | Control Valves |
| 61-68 | Drain Parts |
| 500 | Control Valve |

**Claims**

1. A water purification apparatus, comprising:

   a plurality of filtering medium containers arranged in parallel, each being adapted to accommodate a filtering medium; and
   communication parts adapted to form a water channel connecting respective adjacent pairs of the filtering medium containers arranged in parallel, wherein
   at least one of the filtering medium containers arranged in parallel is configured as a biofiltration part by aerobic bacteria,
   a filtering medium container arranged downstream from the biofiltration part by aerobic bacteria is configured as a biofiltration part by anaerobic bacteria, and
   the water purification apparatus is provided with at least one flow rate control valve adapted to arbitrarily control a flow rate of the water flowing into the biofiltration part by anaerobic bacteria.

2. The water purification apparatus according to claim 1, wherein
   the communication parts are configured to connect respective adjacent pairs of the filtering medium containers arranged in parallel alternately on one side and the other in relation to a center in a longitudinal direction of the filtering medium container.

**Amended claims under Art. 19.1 PCT**

1. A water purification apparatus, comprising:

   a plurality of filtering medium containers arranged in parallel, each being adapted to accommodate a filtering medium; and
communication parts adapted to form a water channel connecting respective adjacent pairs of the filtering medium containers arranged in parallel,

wherein at least one of the filtering medium containers arranged in parallel is configured as a biofiltration part by aerobic bacteria,
a filtering medium container arranged downstream from the biofiltration part by aerobic bacteria is configured as a biofiltration part by anaerobic bacteria, and
the water purification apparatus is provided with at least one flow rate control valve adapted to divide a water flow in at least two directions so as to arbitrarily control a flow rate of the water flowing into the biofiltration part by anaerobic bacteria.

**2.** The water purification apparatus according to claim 1,
wherein the communication parts are configured to connect respective adjacent pairs of the filtering medium containers arranged in parallel alternately on one side and the other in relation to a center in a longitudinal direction of the filtering medium container.

FIG. 1

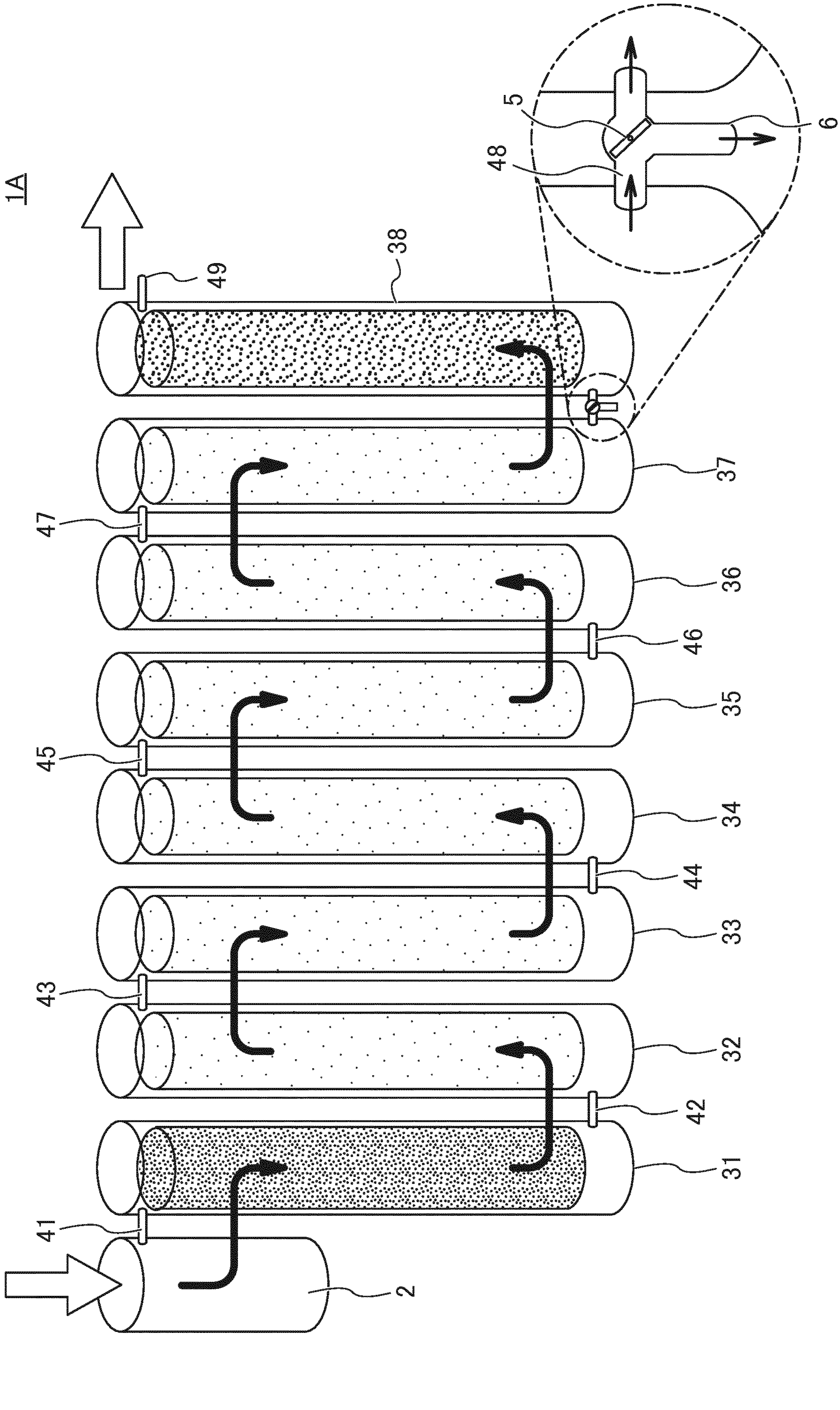

FIG. 2

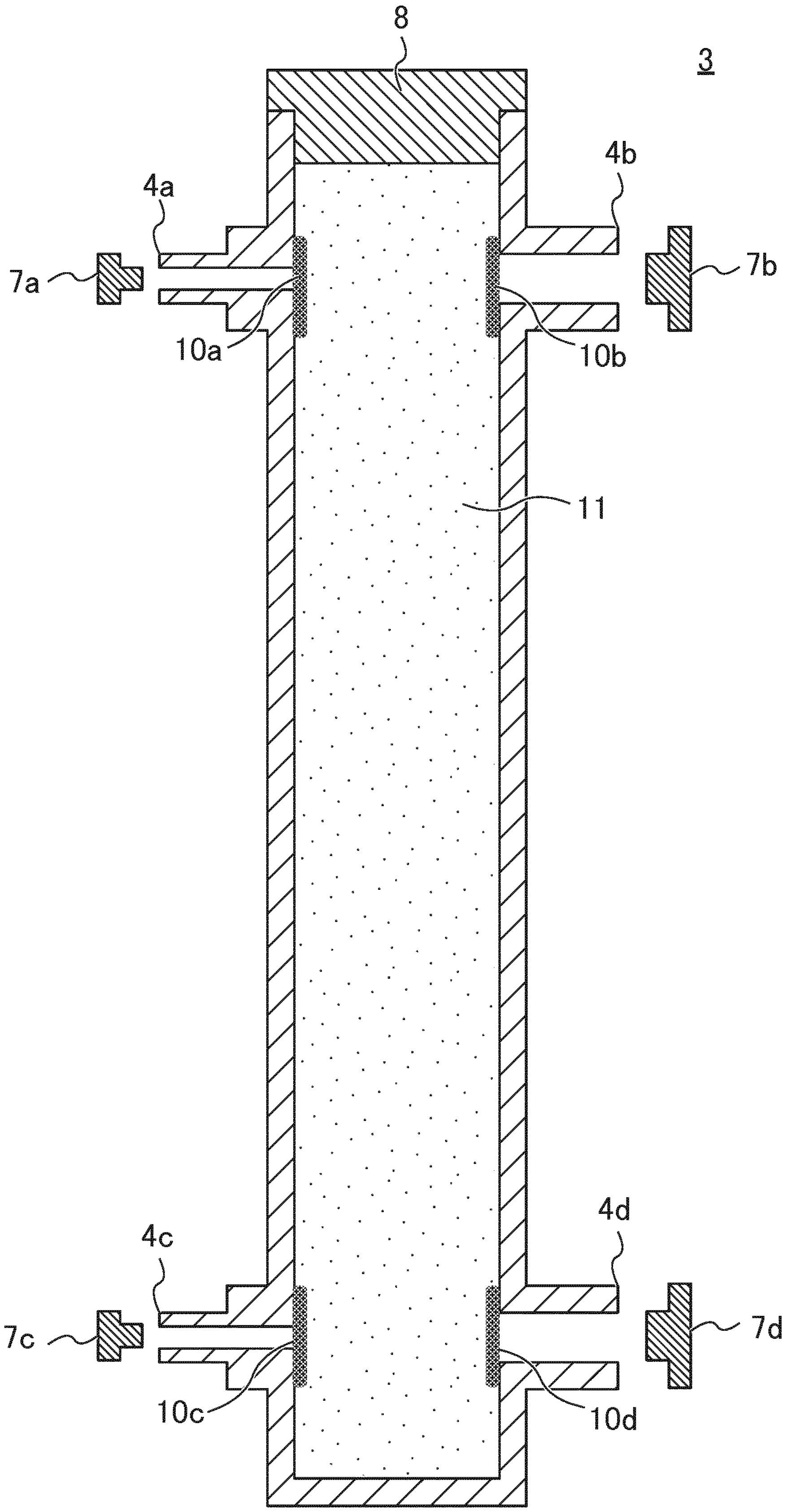

FIG. 3

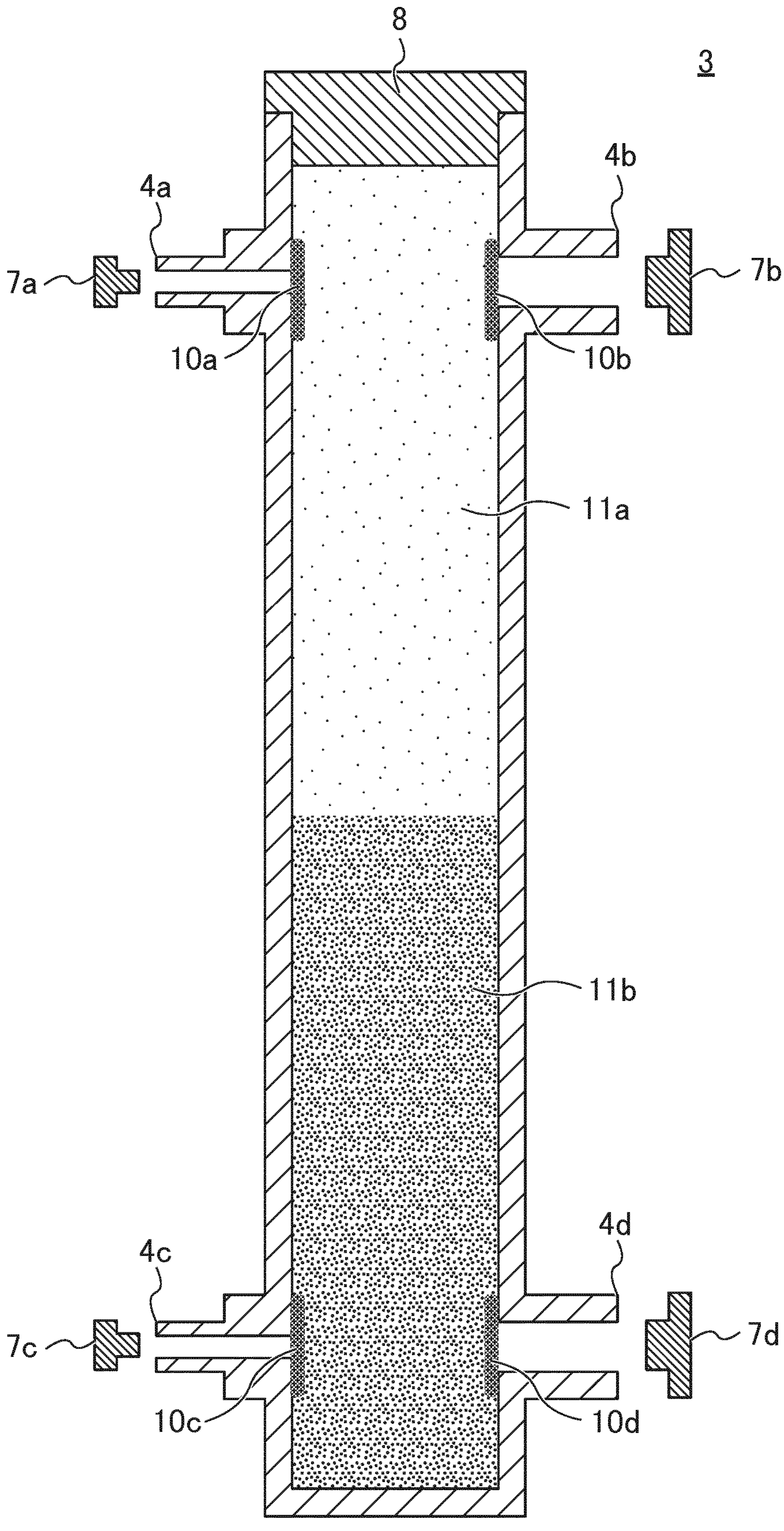

FIG. 4

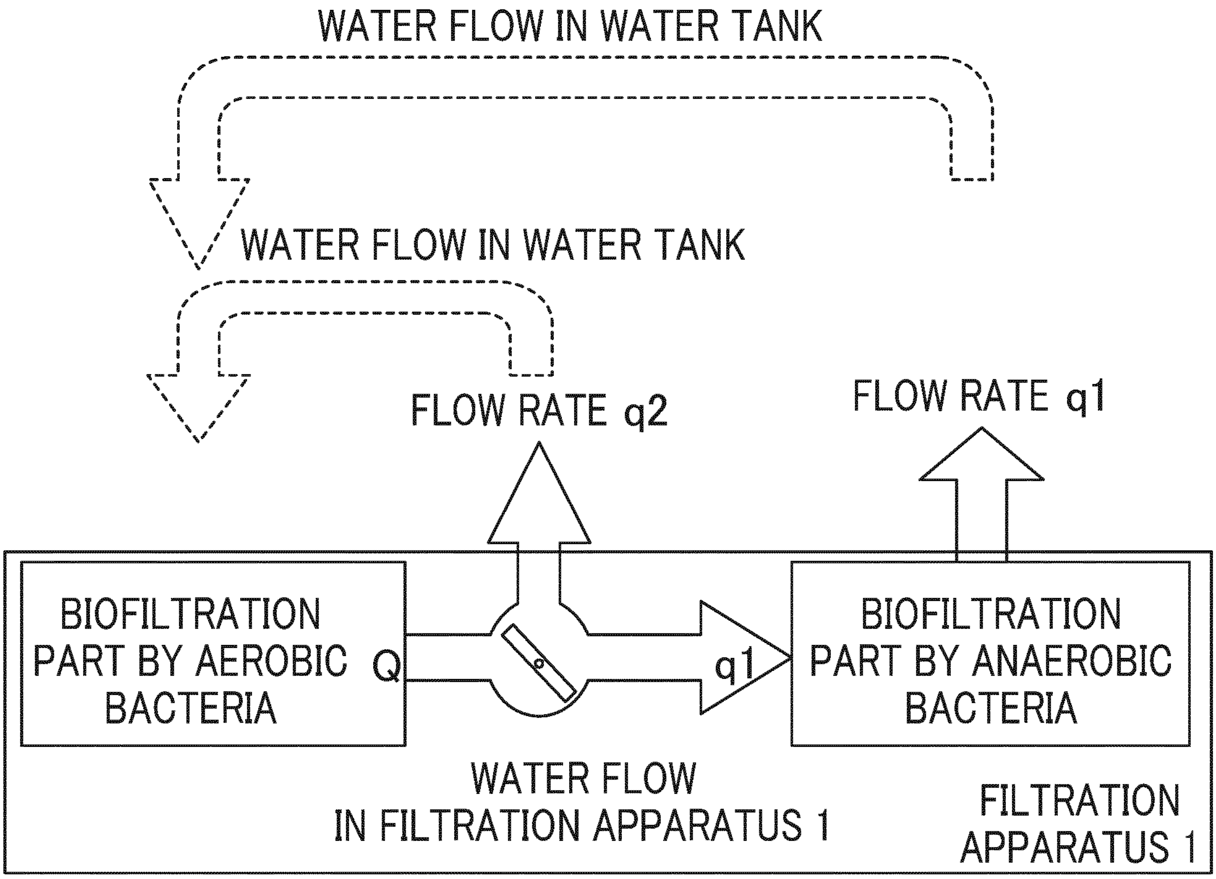
WATER FLOW IN WATER TANK
WATER FLOW IN WATER TANK
FLOW RATE q2
FLOW RATE q1
BIOFILTRATION PART BY AEROBIC BACTERIA
Q
q1
BIOFILTRATION PART BY ANAEROBIC BACTERIA
WATER FLOW IN FILTRATION APPARATUS 1
FILTRATION APPARATUS 1

FIG. 5

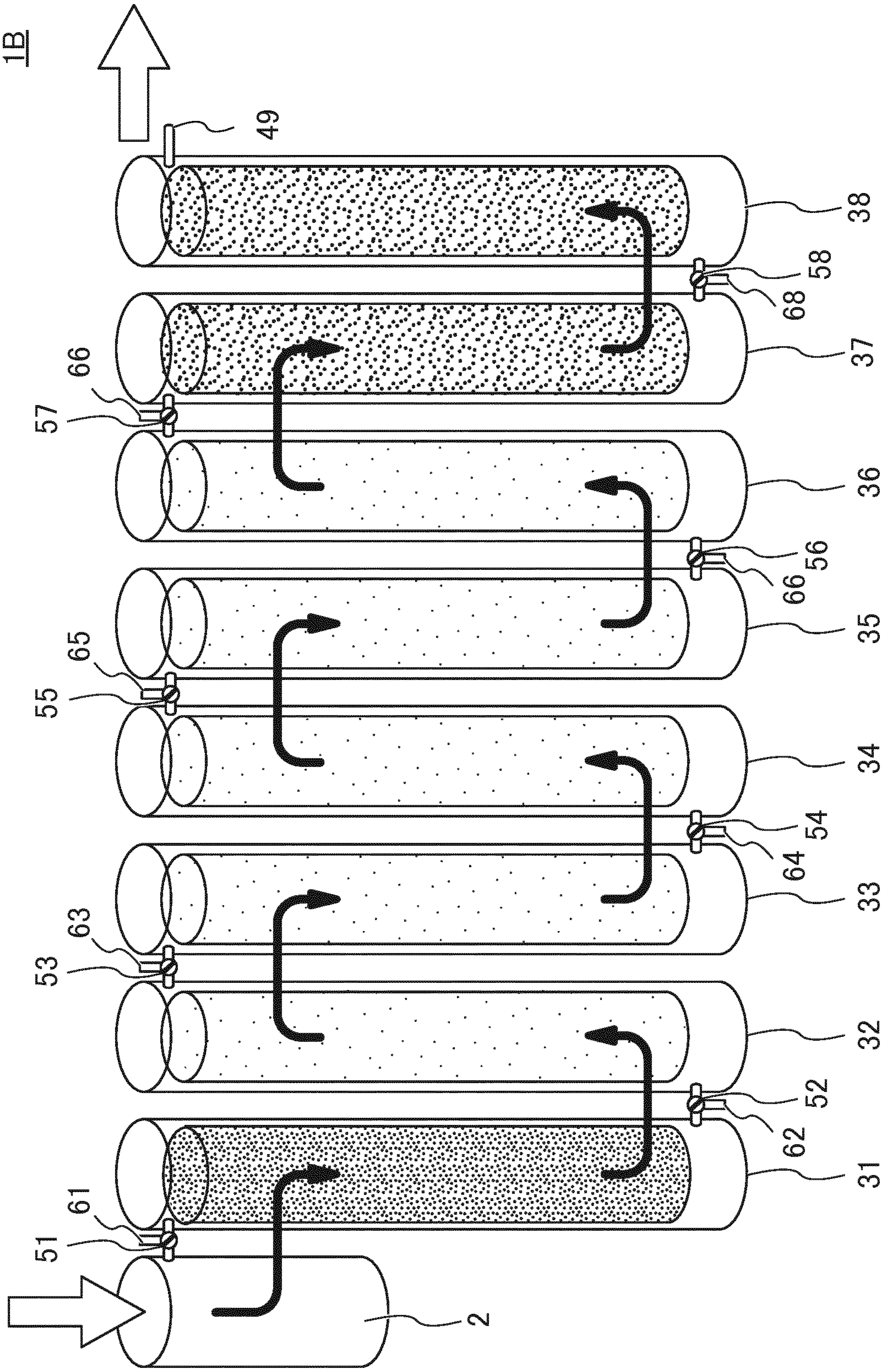
1B
49
38
58
68
37
66
57
36
56
66
35
65
55
34
54
64
33
63
53
32
52
62
31
61
51
2

FIG. 6

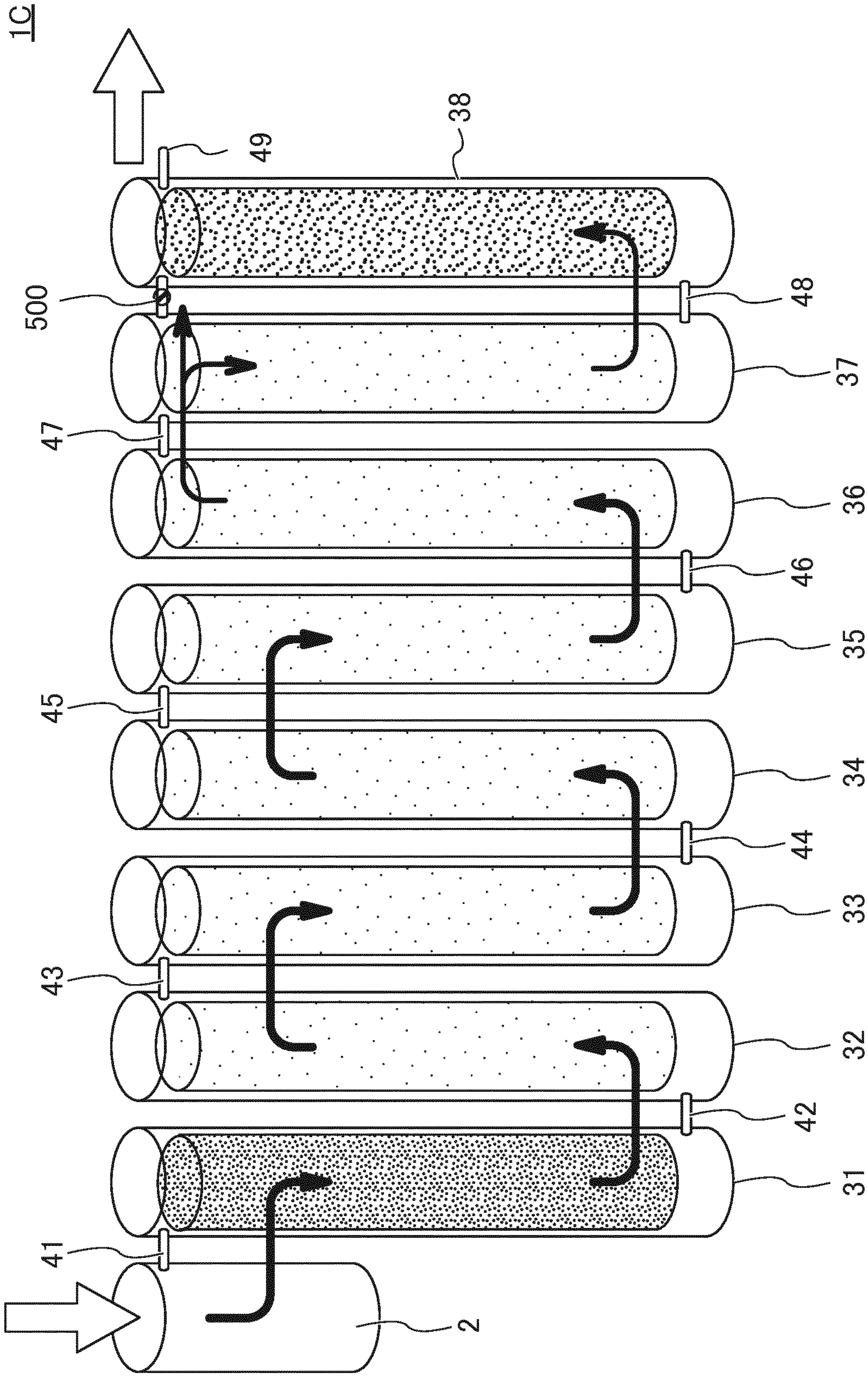

FIG. 7

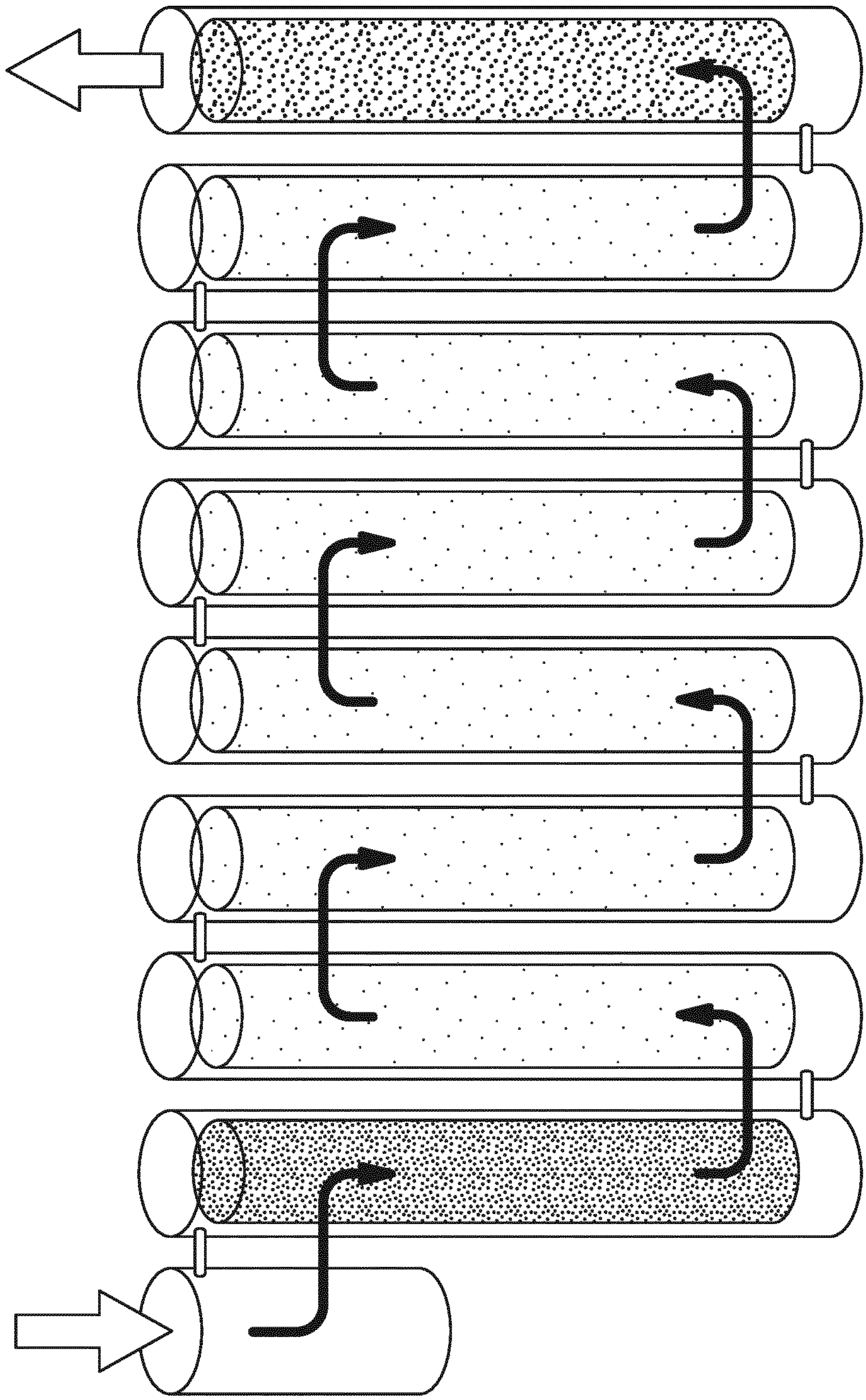

FIG. 8

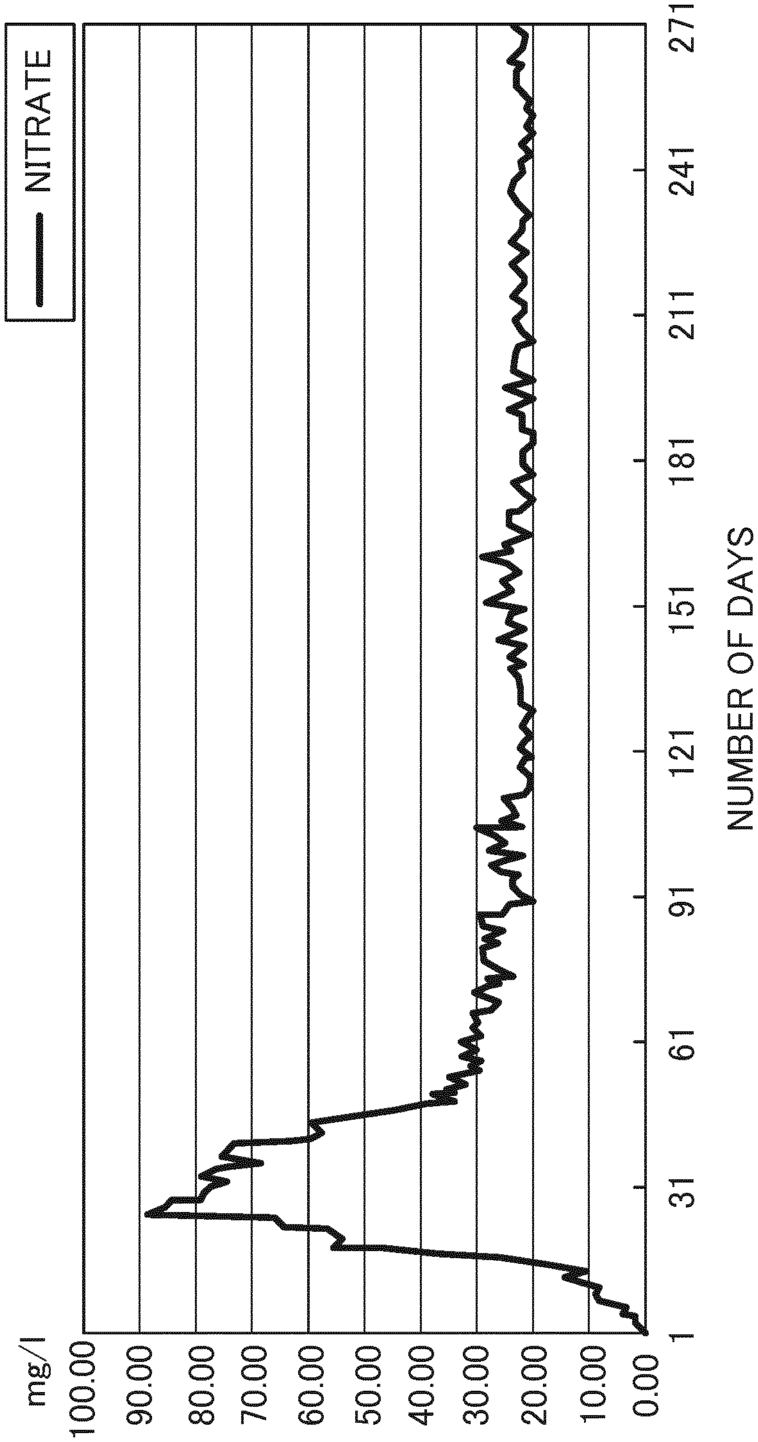
NITRATE
mg/l
100.00
90.00
80.00
70.00
60.00
50.00
40.00
30.00
20.00
10.00
0.00
1
31
61
91
121
151
181
211
241
271
NUMBER OF DAYS

FIG. 9

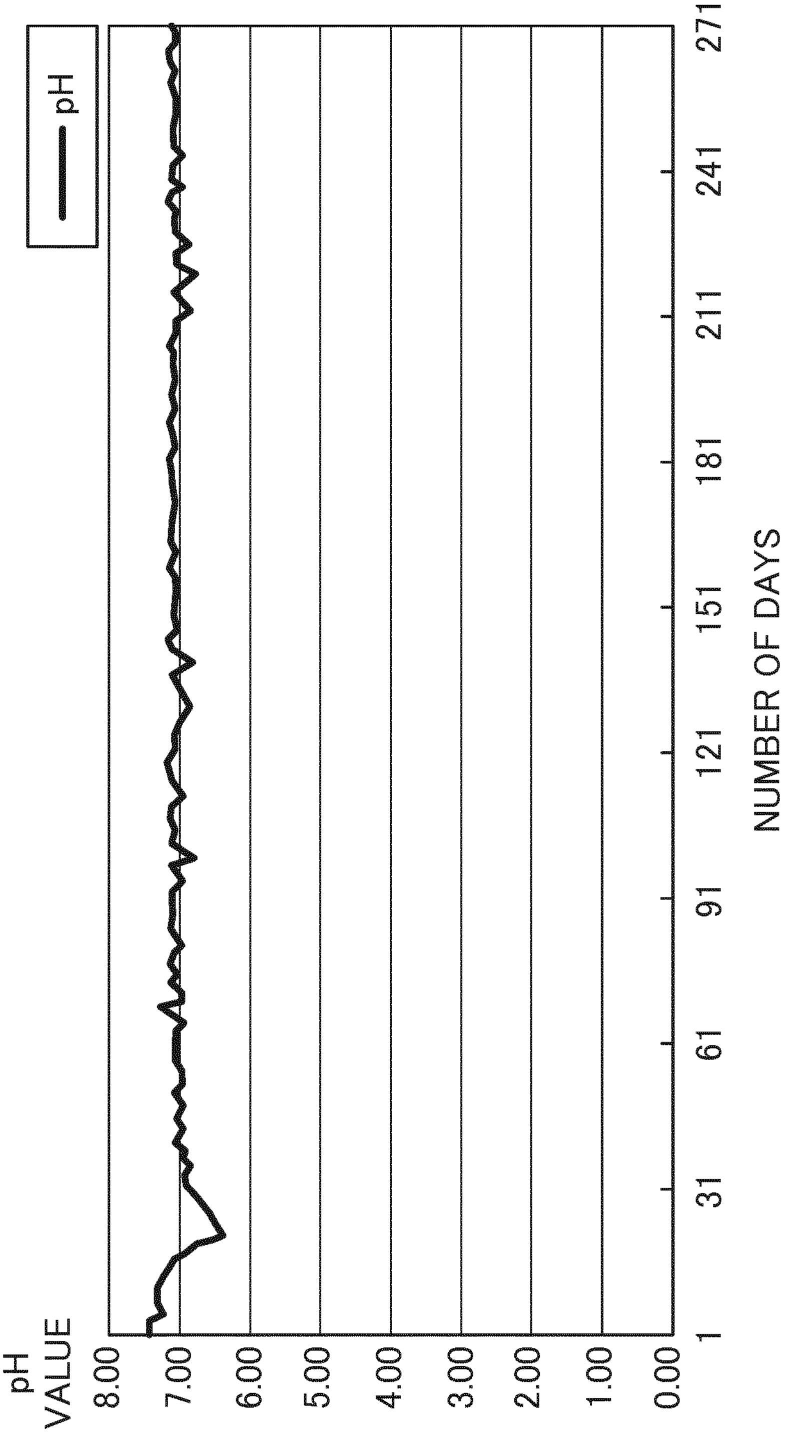
pH
VALUE
8.00
7.00
6.00
5.00
4.00
3.00
2.00
1.00
0.00
1
31
61
91
121
151
181
211
241
271
NUMBER OF DAYS
pH

## INTERNATIONAL SEARCH REPORT

International application No.
PCT/JP2013/063778

A. CLASSIFICATION OF SUBJECT MATTER
*C02F3/34*(2006.01)i, *E03F1/00*(2006.01)i

According to International Patent Classification (IPC) or to both national classification and IPC

B. FIELDS SEARCHED

Minimum documentation searched (classification system followed by classification symbols)
C02F3/34, E03F1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-290293 A (Daikin Industries, Ltd.), 11 November 1997 (11.11.1997), claims; paragraphs [0015], [0016], [0021]; fig. 1 (Family: none) | 1<br>2 |
| Y | JP 2002-143887 A (Shunsuke TAKADA), 21 May 2002 (21.05.2002), claims; paragraphs [0006], [0014], [0022]; fig. 1, 2 & TW 581118 U | 2 |
| A | JP 2000-126794 A (Masakazu KURODA), 09 May 2000 (09.05.2000), claims; paragraph [0009]; fig. 1 (Family: none) | 1,2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 July, 2013 (23.07.13) | 30 July, 2013 (30.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/063778

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-284453 A (Mitsubishi Heavy Industries, Ltd.), 07 October 2003 (07.10.2003), claims; paragraphs [0020], [0026]; fig. 1 (Family: none) | 1,2 |
| A | JP 2009-247255 A (Taisei Corp.), 29 October 2009 (29.10.2009), paragraphs [0017], [0031], [0043]; fig. 1 (Family: none) | 1,2 |
| A | JP 2008-29324 A (Iris Ohyama Inc.), 14 February 2008 (14.02.2008), paragraph [0018]; fig. 1 to 16 & US 2008/0006576 A1 | 1,2 |
| A | JP 7-236389 A (Kitajima Sangyo Yugen Kaisha), 12 September 1995 (12.09.1995), paragraphs [0010] to [0012]; fig. 1 (Family: none) | 1,2 |
| A | JP 2007-763 A (Osaka Sangyo University), 11 January 2007 (11.01.2007), paragraphs [0035], [0071], [0089]; fig. 1 (Family: none) | 1,2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002143887 A